(19) Europäisches Patentamt
European Patent Office
Office européen des brevets

(11) **EP 4 556 504 A1**

(12) **EUROPEAN PATENT APPLICATION**
published in accordance with Art. 153(4) EPC


(43) Date of publication:
**21.05.2025 Bulletin 2025/21**

(21) Application number: **23880266.4**

(22) Date of filing: **19.10.2023**

(51) International Patent Classification (IPC):
***C08G 61/12*** *(2006.01)* ***H01M 4/66*** *(2006.01)*
***H01M 4/131*** *(2010.01)* ***H01M 10/052*** *(2010.01)*
***H01M 4/02*** *(2006.01)*

(52) Cooperative Patent Classification (CPC):
**C08G 61/12; H01M 4/02; H01M 4/131; H01M 4/66; H01M 10/052;** Y02E 60/10

(86) International application number:
**PCT/KR2023/016284**

(87) International publication number:
**WO 2024/085691 (25.04.2024 Gazette 2024/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.10.2022 KR 20220134842**



(71) Applicants:
- **LG Chem, Ltd.**
  **Yeongdeungpo-gu**
  **Seoul 07336 (KR)**
- **LG Energy Solution, Ltd.**
  **Seoul 07335 (KR)**

(72) Inventors:
- **CHOI, Hyun Ju**
  **Daejeon 34122 (KR)**
- **KANG, Joon Koo**
  **Daejeon 34122 (KR)**
- **YANG, Hee Myeong**
  **Daejeon 34122 (KR)**
- **KIM, Ki Hwan**
  **Daejeon 34122 (KR)**
- **PARK, Eun Kyoung**
  **Daejeon 34122 (KR)**
- **SONG, In Taek**
  **Daejeon 34122 (KR)**
- **KOH, Jong Kwan**
  **Daejeon 34122 (KR)**
- **LEE, Seok Kyeong**
  **Daejeon 34122 (KR)**
- **CHO, Woo Hyung**
  **Daejeon 34122 (KR)**
- **LEE, Yu Mi**
  **Daejeon 34122 (KR)**

(74) Representative: **Plasseraud IP**
**104 Rue de Richelieu**
**CS92104**
**75080 Paris Cedex 02 (FR)**


# (54) COPOLYMER


(57) The present specification discloses a copolymer and a use thereof. The copolymer may exhibit a PTC (positive temperature coefficient) effect and an oxidation potential, which are controlled according to objectives. Such a conductive copolymer cannot affect or can rather improve, in a normal state, performance and operation of a secondary battery by exhibiting excellent electrical properties such as low resistance, and can form, in an abnormal state, a current collector for an electrode, an electrode, and a secondary battery comprising the same, which can ensure stability. The present specification also discloses a use of the copolymer.


[Figure 1]

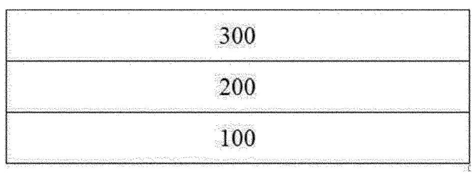


EP 4 556 504 A1

## Description

### Technical Field

Cross-citation with related applications

This application claims the benefit of priority based on Korean Patent Application No. 10-2022-0134842 dated October 19, 2022, the disclosure of which is incorporated herein by reference in its entirety.

Technical field

This specification discloses a copolymer and a use thereof.

### Background Art

An energy storage technology has expanded application areas to mobile phones, tablet and notebook PCs, or electric vehicles, and the like.

As the data processing speed of mobile devices such as mobile phones or tablets increases and their used hours also increase, the development of secondary batteries with high energy density and operating potential, long cycle life, and low self-discharge rate is in progress.

In addition, as major developed countries suppress production of cars driven by internal combustion engines to alleviate global warming and air pollution, major automobile manufacturers also develop various electric vehicles, and thus the importance of secondary batteries having high energy density, high discharge voltage, and output stability increases as driving sources thereof.

However, according to the above trend, the occurrence frequency of ignition or explosion accidents due to overcharging, high-temperature exposure or outer shocks, and the like in devices or automobiles using secondary batteries as an energy source also increases.

As a main cause of such accidents, a short phenomenon, in which a positive electrode and a negative electrode inside an electrode assembly come into direct contact with each other mainly due to external stimuli, is known. When the secondary battery is overcharged or exposed to high temperatures or external stimuli, the short phenomenon can occur by the separator shrinkage due to the internal temperature increase of the secondary battery, or the internal structure destruction of the secondary battery due to outer shocks, and the like.

When the short phenomenon occurs, migration of lithium ions and electrons is concentrated through the region where the positive electrode and the negative electrode are in direct contact with each other, so that internal heat generation can be promoted. Accordingly, it is known that as gas or the like is generated inside the battery, the volume expands, and the risk of ignition increases.

### Disclosure

### Technical Problem

The present specification discloses a copolymer and a use thereof. The present specification is intended to disclose a conductive copolymer exhibiting a PTC (positive temperature coefficient) effect and an oxidation potential, which are controlled according to objectives. Such a conductive copolymer cannot affect or can rather improve, in a normal state, performance and operation of a secondary battery by exhibiting excellent electrical properties such as low resistance, and can form, in an abnormal state, a current collector for an electrode, an electrode, and a secondary battery comprising the same, which can ensure stability. The present specification is also intended to disclose a use of the copolymer.

### Technical Solution

In this specification, the term room temperature means a natural temperature without heating or cooling, where the room temperature may be, for example, any one temperature in a range of 10°C to 30°C, or a temperature of about 23°C, about 25°C, or about 27°C or so.

Among the physical properties mentioned in this specification, when the measurement temperature affects the physical property, the relevant physical property is a physical property measured at room temperature, unless otherwise specified.

The unit of temperature in this specification is Celsius (°C), unless otherwise specified.

In this specification, the term normal pressure means a natural pressure without pressurization or depressurization, which may usually mean a pressure of about 730 mmHg to 790 mmHg or so.

Among the physical properties mentioned in this specification, when the measurement pressure affects the physical property, the relevant physical property is a physical property measured at normal pressure, unless otherwise specified.

Among the physical properties mentioned in this specification, when the measurement humidity affects the result, the relevant physical property is a physical property measured at humidity under standard conditions, unless otherwise specified.

The humidity under standard conditions means any relative humidity in a range of 40% to 60% in relative humidity, which means, for example, relative humidity of 55%, or 60% or so.

In this specification, the term normal state means a normal operating state of a secondary battery (e.g., a normal charging or discharging state of a secondary battery), or a storage state thereof.

In this specification, the term abnormal state means a dangerous state in which abnormal charge flow, abnormal heating, or explosion, and the like occurs due to an external impact and/or a short circuit phenomenon, and the like, or in which a probability of occurrence of such an abnormal state is increased.

The present specification discloses a copolymer.

The copolymer may exhibit a PTC (positive temperature coefficient) effect and an oxidation potential, which are precisely controlled according to objectives.

The PTC (positive temperature coefficient) effect is an effect in which resistance increases depending on the temperature. Therefore, if the PTC effect of the conductive copolymer is designed so that it is not exerted or is suppressed at a temperature in a normal state, and then appears in an abnormal state, the stability of the secondary battery can be secured by suppressing the abnormal charge flow.

In addition, by adjusting the oxidation potential of the conductive copolymer, the secondary battery to which the copolymer is applied can be stably operated upon repeated charging and discharging in the normal state and high-speed charging and discharging.

The copolymer comprises at least two different monomer units. In this specification, the term monomer unit means a structure in which a monomer is polymerized and included in the copolymer, unless otherwise specifically defined.

The copolymer may be a polythiophene or a thiophene polymer. In this specification, the term polythiophene or thiophene polymer means a polymer containing thiophene units in a certain level or more. In this specification, the term thiophene unit means a monomer unit formed by polymerizing a thiophene-based monomer, and the thiophene-based monomer means a monomer containing a thiophene skeleton.

The lower limit of the ratio of the thiophene unit in the polythiophene or thiophene polymer may be about 10 mol%, 15 mol%, 20 mol%, 25 mol%, 30 mol%, 35 mol%, 40 mol%, 45 mol%, 50 mol%, 55 mol%, 60 mol%, 65 mol%, 70 mol%, or 75 mol% or so, based on the total mole number of all monomer units in the polythiophene or thiophene polymer, and the upper limit thereof may be 99 mol%, 97 mol%, 95 mol%, 93 mol%, 91 mol%, 89 mol%, 87 mol%, 85 mol%, 83 mol%, 81 mol%, 79 mol%, 77 mol%, 75 mol%, 73 mol%, 71 mol%, 69 mol%, 67 mol%, 65 mol%, 63 mol%, 61 mol%, 59 mol%, 57 mol%, 55 mol%, 53 mol%, or 51 mol% or so. The ratio of the thiophene unit in the polythiophene or thiophene polymer may be within a range of more than or equal to, or more than any one of the above-described lower limits; or may also have a range between less than or equal to, or less than any one of the above-described upper limits and more than or equal to, or more than any one of the above-described lower limits.

As the thiophene unit, a thiophene unit having a hydrocarbon functional group may be applied. In this specification, the term hydrocarbon functional group means a monovalent hydrocarbon group (i.e., a monovalent functional group composed of carbon and hydrogen), or a monovalent functional group including the monovalent hydrocarbon group. Therefore, the hydrocarbon functional group may also include other atoms in addition to carbon and hydrogen.

The lower limit of the carbon number of the hydrocarbon functional group or the monovalent hydrocarbon group may be 3, 4, 5, 6, 7, 8, 9, 10, 11, or 12 or so, and the upper limit thereof may also be 20, 19, 18, 17, 16, 15, 14, 13, 12, 11, 10, 9, 8, 7, 6, 5, 4, or 3 or so. The carbon number of the hydrocarbon functional group or the monovalent hydrocarbon group may be within a range of more than or equal to, or more than any one of the above-described lower limits; or within a range of less than or equal to, or less than any one of the above-described upper limits; or may also have a range between less than or equal to, or less than any one of the above-described upper limits and more than or equal to, or more than any one of the above-described lower limits.

The carbon number may be the total carbon number present in the hydrocarbon functional group or the monovalent hydrocarbon group, or the carbon number of the hydrocarbon chain with a linear structure included in the hydrocarbon functional group or the monovalent hydrocarbon group. That is, the hydrocarbon functional group or the monovalent hydrocarbon group may have a linear structure or a branched structure, and even in the case of the branched structure, the carbon number constituting the longest linear chain in the branched structure may be within the above range.

For example, if the branched structure is a 2-ethylhexyl group, the carbon number constituting the longest chain is 6 included in the hexyl chain.

An example of the monovalent hydrocarbon group may include an alkyl group, an alkynyl group, or an alkenyl group, and an example of the hydrocarbon functional group may include an alkyl group, an alkenyl group, an alkynyl group, an alkoxy group, an alkylcarbonyl group, or an alkylcarbonyloxy group, and the like, without being limited thereto. **In** a suitable example, the hydrocarbon functional group may be an alkyl group and/or an alkoxy group.

The carbon number present in the alkyl group, the alkenyl group, the alkynyl group, the alkoxy group, the alkyl group of the alkylcarbonyl group and the alkyl group of the alkylcarbonyloxy group may be in the range of the carbon number present in the hydrocarbon functional group or the monovalent hydrocarbon group.

For example, the alkyl group, the alkenyl group, the alkynyl group, the alkoxy group, the alkyl group of the alkylcarbonyl group and the alkyl group of the alkylcarbonyloxy group may have a linear or branched structure, and in the case of the branched chain, the carbon number constituting the longest linear chain in the relevant branched structure may be within the range of the carbon number present in the hydrocarbon functional group or the monovalent hydrocarbon group.

The alkyl group, the alkenyl group, the alkynyl group, the alkoxy group, the alkylcarbonyl group or the alkylcarbonyloxy group, which is a hydrocarbon functional group, may also be optionally substituted with one or more substituents.

In the conductive copolymer, the lower limit of the molar ratio of the thiophene unit having the hydrocarbon functional group may be 30 mol%, 35 mol%, 40 mol%, 45 mol%, 50 mol%, 55 mol%, 60 mol%, 65 mol%, or 70 mol% or so, and the upper limit thereof may be 95 mol%, 90 mol%, 85 mol%, 80 mol%, 75 mol%, 70 mol%, 65 mol%, 60 mol%, 55 mol%, 50 mol%, or 45 mol% or so. The ratio is a ratio based on the total mole number of all monomer units included in the copolymer. The ratio may be within a range of more than or equal to, or more than any one of the above-described lower limits; or within a range of less than or equal to, or less than any one of the above-described upper limits; or may also have a range between less than or equal to, or less than any one of the above-described upper limits and more than or equal to, or more than any one of the above-described lower limits.

Under such a ratio, the conductive copolymer or the polymer layer exhibits an appropriate PTC (positive temperature coefficient) effect, and its surface characteristics are adjusted, whereby it is possible to ensure excellent adhesive force in an electrode or a current collector for an electrode, and it is possible to exhibit an appropriate level of oxidation potential.

The hydrocarbon functional group is a functional group capable of imparting appropriate mobility to the polymerization process of the conductive polymer or the conductive polymer itself. Such a functional group imparts appropriate mobility to a monomer mixture, and diffuses within the monomer mixture to enable polymerization to occur with excellent efficiency. Also, the conductive polymer having the functional group can enable a polymer layer to be formed stably and uniformly between the current collector body and the active material layer through appropriate mobility.

The hydrocarbon functional group is appropriately oriented in the drying or annealing process (heat treatment process) applied in the formation process of the polymer layer, whereby it can also impart the suitable PTC effect and oxidation potential characteristics to the copolymer.

Upon application of a certain amount of heat energy, the hydrocarbon functional group vibrates due to the heat, and dedoping of anions bound to the copolymer are promoted by this vibration (thermal vibration), whereby the resistance increase is induced. The temperature at which the thermal vibration occurs can be controlled by the length and/or amount of the hydrocarbon functional group. For example, under the same temperature, the thermal vibration of a relatively long chain is greater than that of a relatively short chain, whereby the long chain can induce a resistance increase effect at a relatively low temperature. Therefore, the desired PTC effect can be set through control of the length and/or ratio of the hydrocarbon functional group.

As the thiophene unit, a first thiophene unit having a long-chain hydrocarbon functional group and a second thiophene unit having a short-chain hydrocarbon functional group may be included in the copolymer.

In this specification, the term long-chain hydrocarbon functional group means a hydrocarbon functional group having the above-described carbon number in a certain level or more while belonging to the category of the hydrocarbon functional group as described above.

In this specification, the term short-chain hydrocarbon functional group means a hydrocarbon functional group having the above-described carbon number in a certain level or less while belonging to the category of the hydrocarbon functional group as described above.

The lower limit of the carbon number of the long-chain hydrocarbon group may be 10, 11, or 12 or so, and the upper limit thereof may also be 20, 19, 18, 17, 16, 15, 14, 13, 12, 11, or 10 or so. The carbon number contained in the long-chain hydrocarbon group may be within a range of more than or equal to, or more than any one of the above-described lower limits; or may also have a range between less than or equal to, or less than any one of the above-described upper limits and more than or equal to, or more than any one of the above-described lower limits.

The lower limit of the carbon number of the short-chain hydrocarbon group may be 3, 4, 5, 6, 7, or 8 or so, and the

upper limit thereof may also be 9, 8, 7, or 6 or so. The carbon number contained in the short-chain hydrocarbon group may be within a range of less than or equal to, or less than any one of the above-described upper limits; or may also have a range between less than or equal to, or less than any one of the above-described upper limits and more than or equal to, or more than any one of the above-described lower limits.

With respect to the long-chain and short-chain hydrocarbon functional groups, other matters except for the above-described carbon number, for example, the meaning of the carbon number, the specific type of the functional group, and the like follow the contents described for the hydrocarbon functional group.

Therefore, for example, the carbon number may be the total carbon number present in the long-chain and short-chain hydrocarbon functional groups, or the carbon number of the hydrocarbon chain with the linear structure included in the functional group. For example, the monovalent hydrocarbon group present in the long-chain and short-chain hydrocarbon functional group may have a linear structure or a branched structure, and even in the case of the branched structure, the carbon number constituting the longest linear chain in the relevant branched structure may be within the above range. For example, if the branched structure is a 2-ethylhexyl group, the carbon number constituting the longest chain is 6.

In addition, an example of the long-chain and short-chain hydrocarbon functional groups may be exemplified by one or more selected from the group consisting of an alkyl group, an alkenyl group, an alkynyl group, an alkoxy group, an alkylcarbonyl group, and an alkylcarbonyloxy group. In a suitable example, the long-chain and short-chain hydrocarbon functional groups may be an alkyl group and/or an alkoxy group.

The carbon number present in the alkyl group, the alkenyl group, the alkynyl group, the alkoxy group, the alkyl group of the alkylcarbonyl group, and the alkyl group of the alkylcarbonyloxy group may be in the range of the carbon number present in the long-chain or short-chain hydrocarbon functional group.

The alkyl group, alkenyl group, alkynyl group, alkoxy group, alkylcarbonyl group, or alkylcarbonyloxy group, which is the hydrocarbon functional group, may also be optionally substituted with one or more substituents.

In the conductive copolymer, the lower limit of the ratio of the total mole number of the first and second thiophene units may be 30 mol%, 35 mol%, 40 mol%, 45 mol%, 50 mol%, 55 mol%, 60 mol%, 65 mol%, or 70 mol% or so, and the upper limit thereof may be 95 mol%, 90 mol%, 85 mol%, 80 mol%, 75 mol%, 70 mol%, 65 mol%, 60 mol%, 55 mol%, 50 mol%, or 45 mol% or so. The ratio is a ratio based on the total mole number of all monomer units included in the copolymer. The ratio may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits.

The lower limit of the ratio (M2/M1) of the mole number (M2) of the thiophene unit having the short-chain hydrocarbon functional group to the mole number (M1) of the thiophene unit having the long-chain hydrocarbon functional group in the conductive copolymer may be 0.01, 0.05, 0.1, or 0.5 or so, and the upper limit thereof may be 100, 95, 90, 85, 80, 75, 70, 65, 60, 55, 50, 45, 40, 35, 30, 25, 20, 15, 10, 9, 8, 7, 6, 5, 4, 3, 2, 1, 0.8, 0.7, 0.6, or 0.55 or so. The ratio may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits.

Under such a ratio, the conductive copolymer or the polymer layer exhibits an appropriate PTC (positive temperature coefficient) effect, and its surface characteristics are adjusted, whereby it is possible to ensure excellent adhesive force in an electrode or a current collector for an electrode.

The copolymer may further comprise a thiophene unit having a polar functional group together with the thiophene unit having a hydrocarbon functional group as the thiophene unit.

In this specification, the term polar functional group is a functional group containing one or two or more polar atoms, for example, oxygen and/or nitrogen. An example of such a functional group includes a carboxyl group, a hydroxy group, an amino group, a cyano group, a nitro group, an ether group, or a functional group of Formula 4 below, but is not limited thereto.

[Formula 4]

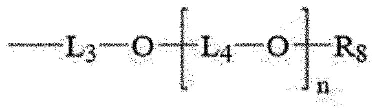

In Formula 4, $L_3$ is a single bond, an alkylene group, or an alkylidene group, $L_4$ is an alkylene group or an

alkylidene group, $R_8$ is hydrogen or an alkyl group, and n is an arbitrary number.

In Formula 4, the matter than $L_3$ is a single bond means a form in which $L_3$ does not exist, and the oxygen atom between $L_4$ and $L_3$ is connected to the backbone of a monomer or polymer.

In this specification, the term alkylene group means a divalent functional group formed by removing hydrogen atoms from two different carbon atoms, respectively, in an alkane, and the term alkylidene group means a divalent functional group formed by removing two hydrogen atoms from one carbon atom in an alkane.

In this specification, unless specifically defined otherwise, the term alkylene group may be an alkylene group with 2 to 20 carbon atoms, 2 to 16 carbon atoms, 2 to 12 carbon atoms, 2 to 8 carbon atoms, or 2 to 4 carbon atoms. The alkylene group may be linear or branched or cyclic, which may also be optionally substituted with one or more substituents.

In this specification, unless specifically defined otherwise, the term alkylidene group may be an alkylidene group with 1 to 20 carbon atoms, 1 to 16 carbon atoms, 1 to 12 carbon atoms, 1 to 8 carbon atoms, or 1 to 4 carbon atoms. The alkylidene group may be linear or branched or cyclic, which may also be optionally substituted with one or more substituents.

In one example, the alkyl group of $R_8$ in Formula 4 may be an alkyl group with 1 to 20 carbon atoms, 1 to 16 carbon atoms, 1 to 12 carbon atoms, 1 to 8 carbon atoms or 1 to 4 carbon atoms, or may be a methyl group or an ethyl group. The alkyl group may be linear, branched, or cyclic, and may be suitably linear or branched.

The lower limit of n in Formula 4 may be 1, 2, 3, or 4 or so, and the upper limit thereof may be 10, 9, 8, 7, 6, 5, 4, or 3 or so. The n may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits.

Through the application of the polar functional group, the polymer layer comprising the conductive polymer may be bonded to other layers to have an appropriate bonding force, and the desired protective function may be efficiently achieved by uniformly forming the conductive polymer layer.

In the case where the thiophene unit having the polar functional group is present in the conductive copolymer, the thiophene unit having the polar functional group may be present such that the total mole number of thiophene units having the hydrocarbon functional group is within a predetermined range per mole of the thiophene unit having the polar functional group.

For example, the lower limit of the total mole number of thiophene units having the hydrocarbon functional group per mole of thiophene units having the polar functional group may be 1 mol, 2 mol, 3 mol, 4 mol, 5 mol, 6 mol, 7 mol, 8 mol, 8.5 mol, or 9 mol or so, and the upper limit thereof may be 500 mol, 450 mol, 400 mol, 350 mol, 300 mol, 250 mol, 200 mol, 150 mol, 100 mol, 95 mol, 90 mol, 85 mol, 80 mol, 75 mol, 70 mol, 65 mol, 60 mol, 55 mol, 50 mol, 45 mol, 40 mol, 35 mol, 30 mol, 25 mol, 20 mol, 15 mol, 10 mol, 9.5 mol, or 9 mol or so. The ratio may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits.

Such a thiophene unit may be, for example, a unit of Formula 1 below.

[Formula 1]

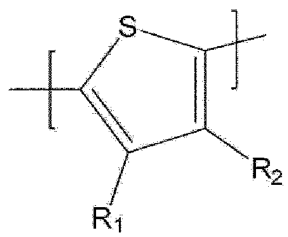

In Formula 1, $R_1$ and $R_2$ may each independently be hydrogen, the polar functional group, or the hydrocarbon functional group.

In another example, $R_1$ and $R_2$ of Formula 1 may also be linked to each other to form a divalent functional group of Formula 2 below.

[Formula 2]

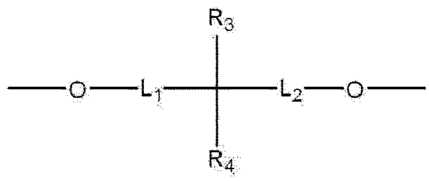

In Formula 2, $L_1$ and $L_2$ may each independently be a single bond, an alkylene group, or an alkylidene group, and $R_3$ and $R_4$ may each independently be hydrogen, the polar functional group, or the hydrocarbon functional group.

For example, if the unit of Formula 1 is the thiophene unit having the hydrocarbon functional group as described above, one or more of $R_1$ and $R_2$ may be the hydrocarbon functional group (if $R_1$ and $R_2$ are not linked), or one or more of $R_3$ and $R_4$ may be the hydrocarbon functional group (if $R_1$ and $R_2$ are not linked).

For example, if the unit of Formula 1 is the thiophene unit having the polar functional group as described above, one or more of $R_1$ and $R_2$ may be the polar functional group (if $R_1$ and $R_2$ are not linked), or one or more of $R_3$ and $R_4$ may be the polar functional group (if $R_1$ and $R_2$ are not linked).

For example, if the unit of Formula 1 above is the thiophene unit having the long-chain hydrocarbon functional group as described above, one or more of $R_1$ and $R_2$ may be the above-described long-chain hydrocarbon functional group (if $R_1$ and $R_2$ are not linked), or one or more of $R_3$ and $R_4$ may be the above-described long-chain hydrocarbon functional group (if $R_1$ and $R_2$ are not linked).

For example, if the unit of Formula 1 above is the thiophene unit having the short-chain hydrocarbon functional group as described above, one or more of $R_1$ and $R_2$ may be the above-described short-chain hydrocarbon functional group (if $R_1$ and $R_2$ are not linked), or one or more of $R_3$ and $R_4$ may be the above described short-chain hydrocarbon functional group (if $R_1$ and $R_2$ are not linked).

Specific descriptions of the hydrocarbon functional group, the polar functional group, the long-chain hydrocarbon functional group, and the short-chain hydrocarbon functional group are as described above.

The specific description of the alkylene group and alkylidene group of the above chemical formula 2 is as described in Formula 4 above.

The copolymer may comprise another additional monomer unit together with the thiophene unit. For example, an additional monomer may be included to adjust the oxidation potential of the copolymer.

As such a monomer, for example, pyrrole or a monomer including its skeleton may be exemplified. Such a monomer may play a role in lowering the high oxidation potential according to the thiophene unit.

For example, the copolymer may comprise a unit of Formula 3 below together with the thiophene unit.

[Formula 3]

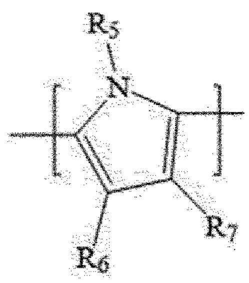

In Formula 3, $R_5$, $R_6$, and $R_7$ are each independently hydrogen, a polar functional group, or a hydrocarbon functional group. Here, the specific details of the polar functional group and the hydrocarbon functional group are as described for the thiophene unit.

A copolymer in which the above units exist simultaneously can exhibit an appropriate oxidation potential along with the PTC effect. Accordingly, the copolymer may be applied to an electrode to induce stable operation of a secondary battery without an increase in resistance in a normal state.

The ratio of the unit of Formula 3 above in the copolymer is adjusted according to the desired PTC effect and/or oxidation potential, which is not particularly limited.

In one example, the lower limit of the ratio of the unit of Formula 3 above in the copolymer may be 1 mol%, 5 mol%, 10 mol%, 15 mol%, 20 mol%, 25 mol%, 30 mol%, 35 mol%, 40 mol%, 45 mol%, or 50 mol% or so, and the upper limit thereof

may be 95 mol%, 90 mol%, 85 mol%, 80 mol%, 75 mol%, 70 mol%, 65 mol%, 60 mol%, 55 mol%, 50 mol%, 45 mol%, 40 mol%, 35 mol%, 30 mol%, 25 mol%, or 20 mol% or so. The ratio is based on the total mole number of all monomer units included in the copolymer. The ratio may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits.

In the copolymer, the lower limit of the ratio of the total mole number of the thiophene unit and the unit of Formula 3 above may be about 50 mol%, 55 mol%, 60 mol%, 65 mol%, 70 mol%, 75 mol%, 80 mol%, 85 mol%, or 90 mol% or so, and the upper limit thereof may be 100 mol%, or 95 mol% or so. The ratio is based on the total mole number of all monomer units included in the copolymer. The ratio may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits.

The copolymer may also further comprise other monomer units within a range without impairing the desired effect, for example, the PTC effect and/or the oxidation potential.

The copolymer may have a weight average molecular weight (Mw) within a predetermined range. The lower limit of the weight average molecular weight of the copolymer may be 10,000 g/mol, 20,000 g/mol, 30,000 g/mol, 40,000 g/mol, 50,000 g/mol, 60,000 g/mol, 70,000 g/mol, 80,000 g/mol, 90,000 g/mol, or 100,000 g/mol or so, and the upper limit thereof may be 2,000,000 g/mol, 1,500,000 g/mol, 1,000,000 g/mol, 900,000 g/mol, 800,000 g/mol, 700,000 g/mol, 600,000 g/mol, 500,000 g/mol, 400,000 g/mol, 300,000 g/mol, 295,000 g/mol, 290,000 g/mol, 285,000 g/mol, 280,000 g/mol, 275,000 g/mol, 270,000 g/mol, 265,000 g/mol, 260,000 g/mol, 255,000 g/mol, 250,000 g/mol, 245,000 g/mol, 240,000 g/mol, 235,000 g/mol, 230,000 g/mol, 225,000 g/mol, 220,000 g/mol, 215,000 g/mol, 210,000 g/mol, 205,000 g/mol, 200,000 g/mol, 195,000 g/mol, 190,000 g/mol, 185,000 g/mol, 180,000 g/mol, 175,000 g/mol, 170,000 g/mol, 165,000 g/mol, 160,000 g/mol, 155,000 g/mol, 150,000 g/mol, 145,000 g/mol, 140,000 g/mol, 135,000 g/mol, 130,000 g/mol, 125,000 g/mol, 120,000 g/mol, 115,000 g/mol, 110,000 g/mol, 105,000 g/mol, or 100,000 g/mol or so. The weight average molecular weight may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits.

The molecular weight distribution of the copolymer, that is, the ratio of the weight average molecular weight (Mw) to the number average molecular weight (Mn), may be within a predetermined range. The lower limit of the molecular weight distribution may be 2, 2.5, 3, 3.5, or 4 or so, and the upper limit thereof may be 8, 7.5, 7, 6.5, 6, 5.5, 5, 4.5, or 4 or so. The molecular weight distribution may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits.

The weight average molecular weight and molecular weight distribution are measured in the manner described in "2. GPC (Gel Permeation Chromatograph)" of Example sections in this specification.

The copolymer may exhibit a controlled oxidation potential. For example, the lower limit of the oxidation potential of the copolymer may be 0V, 0.1V, 0.2V, 0.3V, 0.4V, 0.5V, 0.6V, 0.7V, 0.8V, 0.9V, 1.0V, 1.1V, 1.2V, 1.3V, 1.4V, 1.5V, 1.6V, 1.7V, 1.8V, 1.9V, 2.0V, 2.1V, 2.2V, 2.3V, 2.4V, 2.5V, 2.6V, 2.7V, 2.8V, 2.9V, 3V, 3.1V, 3.2V, 3.3V, 3.4V, 3.5V, 3.6V, 3.7V, 3.8V, or 3.9V or so, and the upper limit thereof may be 6.0V, 5.5V, 5V, 4.5V, 4.0V, or 3.9V or so. The oxidation potential may be within a range of less than or equal to, or less than any one of the above-described upper limits; or may also have a range between less than or equal to, or less than any one of the above-described upper limits and more than or equal to, or more than any one of the above-described lower limits. The oxidation potential of the copolymer is an oxidation potential relative to lithium, which is measured based on lithium and lithium ions ($Li/Li^+$). The method for measuring the oxidation potential is described in "4. Oxidation potential measurement method of copolymer" of Example sections in this specification.

In one example, the upper limit of DC resistance at 25°C of the copolymer may be $10^4$ Ω·cm, 9500 Ω·cm, 9000 Ω·cm, 8500 Ω·cm, 8000 Ω·cm, 7500 Ω·cm, 7000 Ω·cm, 6500 Ω·cm, 6000 Ω·cm, 5500 Ω·cm, 5000 Ω·cm, 4500 Ω·cm, 4000 Ω·cm, 3500 Ω·cm, 3000 Ω·cm, 2500 Ω·cm, 2000 Ω·cm, 1500 Ω·cm, 1000 Ω·cm, 950 Ω·cm, 900 Ω·cm, 850 Ω·cm, 800 Ω·cm, 750 Ω·cm, 700 Ω·cm, 650 Ω·cm, 600 Ω·cm, 550 Ω·cm, 500 Ω·cm, 450 Ω·cm, or 400 Ω·cm or so, and the lower limit thereof may be 10 Ω·cm, 50 Ω·cm, 100 Ω·cm, 150 Ω·cm, 200 Ω·cm, 250 Ω·cm, 300 Ω·cm, 350 Ω·cm, or 400 Ω·cm or so. The DC resistance may be within a range of less than or equal to, or less than any one of the above-described upper limits; or may also have a range between less than or equal to, or less than any one of the above-described upper limits and more than or equal to, or more than any one of the above-described lower limits. The DC resistance is measured in the manner described in "6. DC resistance measurement method" of Examples of this specification.

The upper limit of AC impedance resistance of the copolymer may be $10^3$ Ω, 950 Ω, 900 Ω, 850 Ω, 800 Ω, 750 Ω, 700 Ω, 650 Ω, 600 Ω, 550 Ω, 500 Ω, 450 Ω, 400 Ω, 350 Ω, 300 Ω, 250 Ω, 200 Ω, 150 Ω, 100 Ω, 95 Ω, 90 Ω, 85 Ω, 80 Ω, 75 Ω,

70 Ω, 65 Ω, 60 Ω, 55 Ω, or 50 Ω or so, and the lower limit thereof may be 10 Ω, 15 Ω, 20 Ω, 25 Ω, 30 Ω, 35 Ω, 40 Ω, 450 Ω, or 50 Ω or so. The AC impedance resistance may be within a range of less than or equal to, or less than any one of the above-described upper limits; or may also have a range between less than or equal to, or less than any one of the above-described upper limits and more than or equal to, or more than any one of the above-described lower limits. The AC impedance resistance is measured in the manner described in "7. Interface resistance (AC impedance resistance)" of Examples of this specification.

As the copolymer exhibits the DC resistance and/or AC impedance resistance, the secondary battery or electrode assembly to which the copolymer is applied may be stably operated or stored in a normal state.

The copolymer may exhibit a PTC effect designed according to objectives.

For example, the copolymer may exhibit a characteristic in which ΔR1 of Equation 1 below is in a predetermined range.

[Equation 1]

$$\Delta R1 = \mathrm{Max}\{(R_{n+5}/R_n)/5\}$$

In Equation 1, $R_n$ is the DC resistance at any temperature n°C within a range of 25°C to 135°C, and $R_{n+5}$ is the DC resistance at a temperature ((n+5)°C) 5°C higher than the temperature n°C, and Max{($R_{n+5}/R_n$)/5} is the maximum value among the ($R_{n+5}/R_n$)/5 values confirmed within the temperature range of 25°C to 135°C.

ΔR1 of Equation 1 is measured for a coin cell to which the copolymer is applied, and the specific method thereof is described in "8. Measurement of maximum resistance change rate (DC resistance)" of Examples. In the method for confirming the ΔR1, the initial temperature is 25°C and the final temperature is 135°C. The $R_{n+5}$ and $R_n$ are identified by measuring the DC resistance at each temperature while increasing the temperature by 5°C from the initial temperature of 25°C. For example, when n is 90, $R_{95}/R_{90}$ is the ratio of the DC resistance at 95°C to the DC resistance at 90°C. The matter that ΔR1 exhibits 100 Ω·cm/°C or more at any temperature within the temperature range of 25°C to 135°C means that the resistance increases relatively rapidly at any temperature within the temperature range.

The lower limit of the ΔR1 may be 100, 150, or 200 or so, and the upper limit thereof may be 1,000, 950, 900, 850, 800, 750, 700, 650, 600, 550, 500, 450, 400, 350, 300, 250, or 200 or so. The unit of the ΔR1 is Ω·cm/°C. The ΔR1 may be within a range of more than or equal to, or more than any one of the above-described lower limits; or may also have a range between less than or equal to, or less than any one of the above-described upper limits and more than or equal to, or more than any one of the above-described lower limits. Through the above characteristics, the electrode to which the copolymer is applied can secure stability of a secondary battery or the like in an abnormal state.

The lower limit of the temperature at which the ΔR1 is identified, that is, the temperature at $R_n$, may be 81°C, 82°C, 83°C, 84°C, 85°C, 86°C, 87°C, 88°C, 89°C, 90°C, 91°C, 92°C, 93°C, 94°C, or 95°C or so, and the upper limit thereof may be 200°C, 190°C, 180°C, 170°C, 160°C, 150°C, 140°C, 130°C, 120°C, 110°C, 100°C, or 95°C or so. The temperature may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits. The temperature is adjusted to a temperature at which an abnormal state occurs or there is a risk that an abnormal state occurs. When a copolymer exhibiting the characteristics is applied, the electrode, electrode assembly, or secondary battery can secure stability under abnormal conditions while maintaining stable performance even in the case where storage in a normal state is performed at a relatively high temperature and in charging and discharging states at high temperatures.

The copolymer may exhibit characteristics in which ΔR2 of Equation 2 below is within a predetermined range.

[Equation 2]

$$\Delta R2 = \mathrm{Max}\{(R_{z+5}/R_z)/5\}$$

In Equation 2, $R_z$ is the AC impedance resistance at any temperature n°C within a range of 25°C to 135°C, and $R_{z+5}$ is the AC impedance resistance at a temperature ((n+5)°C) 5°C higher than the temperature n°C, and Max {($R_{z+5}/R_z$)/5} is the maximum value among the ($R_{z+5}/R_z$)/5 values confirmed within the temperature range of 25°C to 135°C.

ΔR2 of Equation 2 is measured for a coin cell to which the copolymer is applied, and the specific method thereof is described in "9. Measurement of maximum resistance change rate (AC impedance)" of Examples. In the method for

identifying the ΔR2, the initial temperature is 25°C and the final temperature is 135°C. The $R_{z+5}$ and $R_z$ are identified by measuring the AC impedance resistance at each temperature while increasing the temperature by 5°C from the initial temperature of 25°C. For example, when n is 90, $R_{95}/R_{90}$ is the ratio of the AC impedance resistance at 95°C to the AC impedance resistance at 90°C. The matter that ΔR2 exhibits 10 Ω/°C or more at any temperature within the temperature range of 25°C to 135°C means that the resistance of the copolymer increases relatively rapidly at any temperature within the temperature range.

The lower limit of the ΔR2 may be 10, 12, 14, 16, 18, 20, 22, or 24 or so, and the upper limit thereof may be 100, 95, 90, 85, 80, 75, 70, 65, 60, 55, 50, 45, 40, 35, 30, 25, or 24 or so. The unit of the ΔR2 is Ω/°C. The ΔR2 may be less than or equal to, or less than any one of the above-described upper limits, or may be more than or equal to, or more than any one of the above-described lower limits, or may also have a range between less than or equal to, or less than any one of the above-described upper limits and more than or equal to, or more than any one of the above-described lower limits. Through the characteristic, the electrode to which the copolymer is applied can secure the stability of a secondary battery or the like in an abnormal state.

The lower limit of the temperature at which ΔR2 of the above range is identified, that is, the temperature at $R_z$, may be 80°C, 81°C, 82°C, 83°C, 84°C, 85°C, 86°C, 87°C, 88°C, 89°C, 90°C, 91°C, 92°C, 93°C, 94°C, or 95°C or so, and the upper limit thereof may be 200°C, 190°C, 180°C, 170°C, 160°C, 150°C, 140°C, 130°C, 120°C, 110°C, 100°C, or 95°C or so. The temperature may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits. The temperature is adjusted to a temperature at which an abnormal state occurs or there is a risk that an abnormal state occurs. When a copolymer exhibiting the characteristics is applied, the electrode, electrode assembly, or secondary battery can secure stability under abnormal conditions while maintaining stable performance even in the case where storage in a normal state is performed at a relatively high temperature and in charging and discharging states at high temperatures.

The present specification discloses a current collector for an electrode, or an electrode, to which the copolymer is applied.

The current collector for an electrode may comprise a current collector body and a polymer layer formed on the body. The polymer layer may comprise the above-described copolymer.

The current collector for an electrode may be used to form an electrode. For example, an electrode formed using the current collector for an electrode may comprise the current collector for an electrode and an active material layer formed on the polymer layer of the current collector. Figure 1 is a diagram showing an electrode in which an active material layer (300) is formed on the polymer layer (200) of the current collector for an electrode including the current collector body (100) and the polymer layer (200).

As in the drawing, in the current collector for an electrode or the electrode, the current collector body (100) and the polymer layer (200), and the polymer layer (200) and the active material layer (300) may also be in contact with each other, and other elements may also exist between them. In addition, although the drawing shows a case in which the active material layer (300) exists only on one side of the current collector body (100), the active material layer (300) may also exist on both sides of the current collector body (100). In this case, the polymer layer (200) may also exist in two layers between each of the active material layers (300) present on both sides of the current collector body (100) and the current collector body (100), and may also exist in one layer between any one of the active material layers (300) present on both sides and the current collector body (100).

The electrode formed with the current collector for the electrode may be a positive electrode (anode) or a negative electrode (cathode) applied to a secondary battery.

In the current collector for an electrode and the electrode, the polymer layer comprises the above-described copolymer, and accordingly, it is possible to secure stable operation or maintenance in a normal state and stability in an abnormal state.

In the electrode, to more effectively achieve the objective, the oxidation potential relationship between the active material layer formed on the polymer layer or the electrode active material included therein and the polymer layer or the copolymer included therein may be adjusted.

For example, in the electrode, the oxidation potential of the active material layer or the electrode active material may be adjusted to be higher than the oxidation potential of the polymer layer or the copolymer.

For example, in the electrode, RV of Equation 3 below may be within a predetermined range.

[Equation 3]

$$RV = 100\times Va/Vp$$

In Equation 3, Va is the oxidation potential of the electrode active material or the active material layer, and Vp is the oxidation potential of the copolymer or the polymer layer.

The oxidation potentials Va and Vp are oxidation potentials relative to lithium, which are measured based on lithium and lithium ions ($Li/Li^+$). The method for measuring the oxidation potential Vp is described in "4. Oxidation potential measurement method of copolymer" of Example sections in this specification, and the method for measuring the oxidation potential Va is described in "5. Method for measuring oxidation potential of electrode active material" of Example sections in this specification.

The lower limit of RV in Equation 3 may be 100.5, 101, 101.5, 102, 102.5, 103, 103.5, 104, or 104.5 or so, and the upper limit thereof may be 200, 150, 145, 140, 135, 130, 125, 120, 115, 110, 109, 108, 107, 106, or 105 or so. The RV may be within a range of more than or equal to, or more than any one of the above-described lower limits; or may also have a range between less than or equal to, or less than any one of the above-described upper limits and more than or equal to, or more than any one of the above-described lower limits.

The oxidation potential Va of the active material layer or the electrode active material is not particularly limited if it has the range of RV of Equation 3 above. For example, the lower limit of the oxidation potential Va may be 2.0V, 2.1V, 2.2V, 2.3V, 2.4V, 2.5V, 2.6V, 2.7V, 2.8V, 2.9V, 3V, 3.1V, 3.2V, 3.3V, 3.4V, 3.5V, 3.6V, 3.7V, 3.8V, 3.9V, or 4.0V or so, and the upper limit thereof may be 5V, 4.9V, 4.8V, 4.7V, 4.6V, 4.5V, 4.4V, 4.3V, 4.2V, or 4.1V or so. The oxidation potential may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits.

The current collector body applied to the current collector for an electrode or the electrode is not particularly limited, and one commonly used as a current collector body for the positive electrode or negative electrode can be used.

If the current collector body has conductivity without causing chemical changes in applied devices such as secondary batteries, the type, size, and shape thereof, and the like are not particularly limited. An example of a material that can be used as the current collector body may be exemplified by a material, and the like in which the surface of copper, aluminum, or stainless steel is surface-treated with carbon, nickel, titanium, or silver, and the like. The current collector body may be in the form of a film, sheet, foil, net, porous body, foam, or non-woven fabric, and the like, which comprises the above material. In some cases, a known surface treatment may also be performed on the surface of the current collector body to improve adhesive force to other layers such as a polymer layer or an active material layer.

Such a current collector body may typically have a thickness within a range of 3 $\mu$m to 500 $\mu$m, but is not limited thereto.

A commonly applied layer may be used as the active material layer.

Typically, the active material layer comprises an electrode active material. The specific type of the electrode active material is not particularly limited, and materials to form a positive electrode or a negative electrode may usually be used.

For example, when the active material layer is a positive electrode active material layer, the electrode active material may include layered compounds such as lithium cobalt oxide ($LiCoO_2$) or lithium nickel oxide ($LiNiO_2$), or compounds substituted with one or more transition metals; lithium iron oxides such as $LiFe_3O_4$; lithium manganese oxides such as Formula $Li_{1+c1}Mn_{2-c1}O_4$ ($0 \leq c1 \leq 0.33$), $LiMnO_3$, $LiMn_2O_3$, or $LiMnO_2$; lithium copper oxides ($Li_2CuO_2$); vanadium oxides such as $LiV_3O_8$, $V_2O_5$, or $Cu_2V_2O_7$; Ni-site lithium nickel oxides represented by Formula $LiNi_{1-c2}M_{c2}O_2$ (where M is at least one selected from the group consisting of Co, Mn, Al, Cu, Fe, Mg, B and Ga, and $0.01 \leq c2 \leq 0.3$ is satisfied); lithium manganese composite oxides represented by Formula $LiMn_{2-c3}M_{c3}O_2$ (where M is at least one selected from the group consisting of Co, Ni, Fe, Cr, Zn, and Ta, and $0.01 \leq c3 \leq 0.1$ is satisfied) or $Li_2Mn_3MO_8$ (here, M is at least one selected from the group consisting of Fe, Co, Ni, Cu and Zn); lithium nickel cobalt manganese (NCM) composite oxides, lithium nickel cobalt manganese aluminum (NCMA) composite oxides, and $LiMn_2O_4$ in which a part of Li in the formula is substituted with alkaline earth metal ions, and the like, but is not limited thereto.

When the active material layer is a negative electrode active material layer, as the electrode active material, for example, a compound capable of reversible intercalation and deintercalation of lithium may be used. A specific example may include carbonaceous materials such as artificial graphite, natural graphite, graphitized carbon fiber, and amorphous carbon; metallic compounds capable of alloying with lithium, such as Si, Al, Sn, Pb, Zn, Bi, In, Mg, Ga, Cd, Si alloy, Sn alloy, or Al alloy; metal oxides capable of doping and de-doping lithium, such as $SiO_a$ ($0 < a < 2$), $SnO_2$, vanadium oxide, and lithium vanadium oxide; or a composite comprising the metallic compound and the carbonaceous materials such as a Si-C composite or a Sn-C composite, and the like, and any one or a mixture of two or more of the foregoing may be used.

A metal lithium thin film may also be used as the negative electrode active material, and as the carbon material, low crystalline carbon and high crystalline carbon, and the like may also be used. As the low crystalline carbon, soft carbon and hard carbon are representative, and as the high crystalline carbon, high-temperature baked carbons such as amorphous, plate-like, scale-like, spherical, or fibrous natural graphite or artificial graphite, Kish graphite, pyrolytic carbon, mesophase pitch based carbon fiber, mesocarbon microbeads, mesophase pitches, and petroleum and coal tar

pitch derived cokes are representative.

The electrode active material may be included in the active material layer within a range of about 40 wt% to 99.5 wt% relative to the total weight of the active material layer, but the ratio may be changed depending on the use or design of the electrode.

The active material layer may further comprise a binder. The binder serves to improve attachment between the active materials, and adhesive force on between the active material layer and the current collector body. An example of the binder is not particularly limited, and one or more may be selected from the group consisting of, for example, PVDF (poly(vinylidene fluoride), PVA (poly(vinyl alcohol)), SBR (styrene butadiene rubber), PEO (poly(ethylene oxide)), CMC (carboxyl methyl cellulose), cellulose acetate, cellulose acetate butylate, cellulose acetate propionate, cyanoethylpullulan, cyanoethyl polyvinyl alcohol, cyanoethyl cellulose, cyanoethyl sucrose, pullulan, polymethylmethacrylate, polybutylacrylate, polyacrylonitrile, polyvinylpyrrolidone, polyvinylacetate, an ethylene vinyl acetate copolymer (polyethylene-co-vinyl acetate), and polyarylate, and used.

In one example, the binder may be included in the active material layer within a range of 0.1 parts by weight to 10 parts by weight relative to 100 parts by weight of the electrode active material, but is not limited thereto.

The active material layer may further comprise a conductive material, as needed. If the conductive material has conductivity without causing chemical changes in the secondary battery, it is not particularly limited, any known material can be used. For example, graphite such as natural graphite or artificial graphite; carbon black, such as carbon black, acetylene black, Ketjen black, channel black, furnace black, lamp black, or thermal black; conductive fibers such as carbon fibers or metal fibers; conductive tubes such as carbon nanotubes (CNTs); metal powders such as fluorocarbon, aluminum, or nickel powder; conductive whiskers such as zinc oxide or potassium titanate; conductive metal oxides such as titanium oxide; conductive materials such as polyphenylene derivatives, and the like may be used.

In one example, the conductive material may be included in the active material layer in an amount of 0.1 parts by weight to 20 parts by weight relative to 100 parts by weight of the electrode active material, but is not limited thereto.

The active material layer may also further comprise any necessary known components in addition to the above-described components optionally.

The polymer layer present on the current collector body may comprise the copolymer. The polymer layer may be composed by comprising only the copolymer, or may further comprise any other necessary additives in addition to the copolymer. The desired electrode can be effectively formed by using the copolymer. In one example, the lower limit of the content of the copolymer in the polymer layer may be 30 wt%, 35 wt%, 40 wt%, 45 wt%, 50 wt%, 55 wt%, 60 wt%, 65 wt%, 70 wt%, 75 wt%, 80 wt%, 85 wt%, 90 wt%, or 95 wt% or so, and the upper limit thereof may be 100 wt%, 95 wt%, 90 wt%, or 85 wt% or so based on the total weight of the polymer layer. The ratio is based on the total weight of the polymer layer. The range of the ratio may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits.

The thickness of the polymer layer may be appropriately controlled depending on the objective. For example, the lower limit of the thickness may be 10 nm, 50 nm, 100 nm, 150 nm, or 200 nm or so, and the upper limit thereof may be 2 μm, 1.5 μm, 1 μm, 950 nm, 900 nm, 850 nm, 800 nm, 750 nm, 700 nm, 650 nm, 600 nm, 550 nm, 500 nm, 450 nm, 400 nm, 350 nm, or 300 nm or so. The thickness may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits. The thickness may be measured in the manner described in "3. Thickness measurement" of Example sections in this specification.

The present specification also discloses a method for manufacturing the current collector for an electrode or the electrode.

The method for manufacturing the current collector for an electrode of the present application may comprise a step of forming the polymer layer on the current collector body, and the method for manufacturing the electrode may comprise a step of forming the active material layer on the polymer layer.

The method of forming the polymer layer on the current collector body is not particularly limited. For example, the polymer layer may be formed by a method of diluting the above-described conductive polymer and other additives, if necessary, in an appropriate solvent to prepare a coating liquid, coating the liquid on the current collector, and then drying it.

In another example, the polymer layer may also be formed by directly polymerizing the monomers forming the conductive polymer on the current collector body.

The method for preparing a coating composition for forming the polymer layer, and the coating method thereof, and the like are not particularly limited, and a method in a known coating method may be applied. In addition, the method of polymerizing the conductive polymer is not particularly limited, and a known method may be applied. For example, as a method for preparing polythiophene, typically, a method using an oxidation polymerization reaction or a method using a

radical reaction is known, and such a method may also be applied to the process of forming the conductive polymer in the present application.

A polymer layer may be formed on a current collector body using the prepared coating composition. This process may typically comprise a step of coating the coating composition on a current collector body and a step of heat-treating the coated coating composition. **In** this process, the characteristics of the polymer layer may also be controlled by the conditions of the heat treatment.

For example, the temperature T of the heat treatment and/or the time H of the heat treatment may be controlled.

For example, the lower limit of the temperature T may be 50°C, 55°C, 60°C, 65°C, 70°C, 75°C, 80°C, 85°C, 90°C, 95°C, 100°C, 105°C, 110°C, 115°C, 120°C, 125°C, 130°C, 135°C, or 140°C or so, and the upper limit thereof may be 300°C, 295°C, 290°C, 285°C, 280°C, 275°C, 270°C, 265°C, 260°C, 255°C, 250°C, 245°C, 240°C, 235°C, 230°C, 225°C, 220°C, 215°C, 210°C, 205°C, 200°C, 195°C, 190°C, 185°C, 180°C, 175°C, 170°C, 165°C, 160°C, 155°C, 150°C, 145°C, 140°C, 135°C, or 130°C or so. The temperature may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits. Within this range, the alignment state of the hydrocarbon groups in the conductive copolymer can be appropriately adjusted, and accordingly, it is possible to secure the desired properties.

To achieve the objective, the product (TXH) of the heat treatment temperature T and the time H may be adjusted. For example, the lower limit of the product (TXH) of the heat treatment temperature T and the time H may be 0.01°C·hour, 0.05°C·hour, 0.1°C·hour, 0.2°C·hour, 0.3°C·hour, 0.5°C·hour, 1°C·hour, 5°C·hour, 10°C·hour, 15°C·hour, 20°C·hour, 25°C·hour, 30°C·hour, 35°C·hour, 40°C·hour, 45°C·hour, 50°C·hour, 75°C·hour, 100°C·hour, 110°C·hour, 120°C·hour, or 130°C·hour or so, and the upper limit thereof may be 100000°C·hour, 95000°C·hour, 90000°C·hour, 85000°C·hour, 80000°C·hour, 75000°C·hour, 70000°C·hour, 65000°C·hour, 60000°C·hour, 55000°C·hour, 50000°C·hour, 45000°C·hour, 40000°C·hour, 35000°C·hour, 30000°C·hour, 25000°C·hour, 20000°C·hour, 15000°C·hour, 10000°C·hour, 9500°C·hour, 9000°C·hour, 8500°C·hour, 8000°C·hour, 7500°C·hour, 7000°C·hour, 6500°C·hour, 6000°C·hour, 5500°C·hour, 5000°C·hour, 4500°C·hour, 4000°C·hour, 3500°C·hour, 3000°C·hour, 2500°C·hour, 2000°C·hour, 1500°C·hour, 1400°C·hour, 1300°C·hour, 1200°C·hour, 1100°C·hour, 1000°C·hour, 900°C·hour, 800°C·hour, 700°C·hour, 600°C·hour, 500°C·hour, 400°C·hour, 300°C·hour, 200°C·hour, 100°C·hour, 90°C·hour, 80°C·hour, 70°C·hour, 60°C·hour, 50°C·hour, 45°C·hour, 40°C·hour, 35°C·hour, 30°C·hour, 25°C·hour, 20°C·hour, 15°C·hour, or 10°C·hour or so. The product (TXH) may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits. Within this range, the alignment state of the hydrocarbon groups in the conductive copolymer can be appropriately adjusted, and accordingly, it is possible to secure the desired properties.

To more effectively secure the desired properties, the heat treatment may be performed in two steps.

For example, the heat treatment may comprise a step of primarily heat-treating the coating composition at a first temperature T1 for a first time H1 and a step of secondarily heat-treating the coating composition at a second temperature T2 for a second time H2, wherein the temperatures T1 and T2 are different from each other, and/or the times H1 and H2 are different from each other.

For example, the lower limit of the temperature T1 may be 50°C, 55°C, 60°C, 65°C, 70°C, 75°C, 80°C, 85°C, 90°C, 95°C, 100°C, 105°C, 110°C, 115°C, 120°C, 125°C, 130°C, 135°C, or 140°C or so, and the upper limit thereof may be 300°C, 295°C, 290°C, 285°C, 280°C, 275°C, 270°C, 265°C, 260°C, 255°C, 250°C, 245°C, 240°C, 235°C, 230°C, 225°C, 220°C, 215°C, 210°C, 205°C, 200°C, 195°C, 190°C, 185°C, 180°C, 175°C, 170°C, 165°C, 160°C, 155°C, 150°C, 145°C, or 140°C or so. The temperature may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits. Within this range, the alignment state of the hydrocarbon groups in the conductive copolymer can be appropriately adjusted, and accordingly, it is possible to secure the desired properties.

For example, the lower limit of the product (T1XH1) of the temperature T1 and the time H1 of the primary heat treatment may be 0.01°C·hour, 0.05°C·hour, 0.1°C·hour, 0.2°C·hour, or 0.3°C·hour, 1°C·hour, 2°C·hour, 3°C·hour, 4°C·hour, 5°C·hour, 6°C·hour, 7°C·hour, 8°C·hour, or 9°C·hour or so, and the upper limit thereof may also be 1000°C·hour, 900°C·hour, 800°C·hour, 700°C·hour, 600°C·hour, 500°C·hour, 400°C·hour, 300°C·hour, 200°C·hour, 100°C·hour, 90°C·hour, 80°C·hour, 70°C·hour, 60°C·hour, 50°C·hour, 45°C·hour, 40°C·hour, 35°C·hour, 30°C·hour, 25°C·hour, 20°C·hour, 15°C·hour, or 10°C·hour or so. The product (T1XH1) may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits. Within this range, the alignment state of the hydrocarbon groups in the conductive copolymer can be appropriately adjusted, and accordingly, it is possible to secure the desired properties.

For example, for example, the lower limit of the heat treatment temperature T2 of the secondary heat treatment may be 50°C, 55°C, 60°C, 65°C, 70°C, 75°C, 80°C, 85°C, 90°C, 95°C, 100°C, 105°C, 110°C, 115°C, 120°C, 125°C, or 130°C or so, and the upper limit thereof may be 300°C, 295°C, 290°C, 285°C, 280°C, 275°C, 270°C, 265°C, 260°C, 255°C, 250°C, 245°C, 240°C, 235°C, 230°C, 225°C, 220°C, 215°C, 210°C, 205°C, 200°C, 195°C, 190°C, 185°C, 180°C, 175°C, 170°C, 165°C, 160°C, 155°C, 150°C, 145°C, 140°C, 135°C, or 130°C or so. The temperature may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits. Within this range, the alignment state of the hydrocarbon groups in the conductive copolymer can be appropriately adjusted, and accordingly, it is possible to secure the desired properties.

The product (T2XH2) of the secondary heat treatment temperature T2 and the time H2 may be adjusted. For example, the lower limit of the product (T2XH2) of the heat treatment temperature T and the time H may be 10°C·hour, 15°C·hour, 20°C·hour, 25°C·hour, 30°C·hour, 35°C·hour, 40°C·hour, 45°C·hour, 50°C·hour, 75°C·hour, 100°C·hour, 110°C·hour, 120°C·hour, or 130°C·hour or so, and the upper limit thereof may also be 1000°C·hour, 900°C·hour, 800°C·hour, 700°C·hour, 600°C·hour, 500°C·hour, 400°C·hour, 300°C·hour, 200°C·hour, 180°C·hour, 160°C·hour, 150°C·hour, 145°C·hour, 140°C·hour, 135°C·hour, or 130°C·hour or so. The product (T2XH2) may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits. Within this range, the alignment state of the hydrocarbon groups in the conductive copolymer can be appropriately adjusted, and accordingly, it is possible to secure the desired properties.

In the above case, the lower limit of the ratio T1/T2 of the temperature T1 of the primary heat treatment and the temperature T2 of the secondary heat treatment may be 0.1, 0.3, 0.5, 0.7, 0.9, 0.95, 1, 1.01, 1.02, 1.03, 1.04, 1.05, 1.06, or 1.07 or so, and the upper limit thereof may be 10, 9, 8, 7, 6, 5, 4, 3, 2, 1.9, 1.8, 1.7, 1.6, 1.5, 1.4, 1.3, 1.2, or 1.1 or so. The ratio T1/T2 may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits. Within this range, the alignment state of the hydrocarbon groups in the conductive copolymer can be appropriately adjusted, and accordingly, it is possible to secure the desired properties.

In the above case, the lower limit of the ratio H2/H1 of the time H1 of the primary heat treatment and the time H2 of the secondary heat treatment may be 0.5, 1, 3, 5, 7, 9, 10, 11, 12, 13, 14, 14.5, or 15 or so, and the upper limit thereof may be 100, 95, 90, 85, 80, 75, 70, 65, 60, 55, 50, 45, 40, 35, 30, 25, 20, 19, 18, 17, 16, 15.5, or 15 or so. The ratio H2/H1 may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits. Within this range, the alignment state of the hydrocarbon groups in the conductive copolymer can be appropriately adjusted, and accordingly, it is possible to secure the desired characteristics.

In the above manufacturing process, a post-process such as an appropriate drying process may also be additionally performed following the coating and/or polymerization process.

Also, the method for forming the active material layer on the polymer layer is not particularly limited. Typically, the active material layer is formed by coating a slurry containing the electrode active material, a binder, and a conductive material on a current collector (on a polymer layer), followed by drying, and then rolling, and this known method can be equally applied to the present application.

The present specification also discloses an electrode assembly or an electrochemical element, for example, a secondary battery, comprising the electrode.

## Advantageous Effects

The present specification discloses a copolymer and a use thereof. The copolymer may exhibit a PTC (positive temperature coefficient) effect and an oxidation potential, which are controlled according to objectives. Such a conductive copolymer cannot affect or can rather improve, in a normal state, performance and operation of a secondary battery by exhibiting excellent electrical properties such as low resistance, and can form, in an abnormal state, a current collector for an electrode, an electrode, and a secondary battery comprising the same, which can ensure stability. The present specification also discloses a use of the copolymer.

**Description of Drawings**

Figure 1 is a cross-sectional diagram of an exemplary electrode of the present application.

Figure 2 is NMR analysis results of a monomer prepared in a preparation example.

**Mode for Invention**

Hereinafter, copolymers and the like disclosed in the present specification are specifically described through examples and comparative examples, but the scope of the copolymers is not limited by the following examples.

**1. NMR analysis method**

$^{1}$H-NMR analyses were performed at room temperature (about 25°C) using an NMR spectrometer including a Bruker UltraShield spectrometer (300 MHz) with a 5 mm triple resonance probe. A sample was diluted in a solvent ($CDCl_3$) for NMR measurement to a concentration of about 10 mg/ml or so and used, and the chemical shift was expressed in ppm.

**2. GPC (Gel Permeation Chromatograph)**

Molecular weight characteristics were measured using GPC (Gel permeation chromatography). A sample is placed in a 5 mL vial and diluted with chloroform to a concentration of about 1 mg/mL or so. Thereafter, the standard sample for calibration and the sample to be analyzed were filtered through a syringe filter (pore size: 0.45 μm), and then measured. As the analysis program, Waters' Empower 3 was used, and a weight average molecular weight (Mw) and a number average molecular weight (Mn) were each obtained by comparing the elution time of the sample with the calibration curve, and the molecular weight distribution (PDI) was calculated by the ratio (Mw/Mn). The measurement conditions of GPC are as follows.

<GPC measurement conditions>

Device: Waters' 2414

Column: using 3 Styragels from Waters

Solvent: THF (tetrahydrofuran)

Column temperature: 35°C

Sample concentration: 1mg/mL, 1μL injection

Standard sample: polystyrene (Mp: 3900000, 723000, 316500, 52200, 31400, 7200, 3940, 485)

**3. Thickness measurement**

The thickness of the polymer layer, and the like was measured by cross-sectioning an electrode using an ion milling device (Hitachi, IM5000), and then photographing an image with a SEM (Scanning Electron Microscope) (JEOL, JSM-7200F). The conditions for forming the cross section by the ion milling were performed by setting the equipment in cross-section milling mode, the speed (reciprocation/min) of 3, the acceleration voltage of 6.0 kV, the discharge voltage of 15 kV, the current of 150 μA, and the time of 4 hours.

**4. Oxidation potential measurement method of copolymer**

An oxidation potential of a copolymer was measured in the following manner. A layer (hereinafter, polymer layer) having a thickness of about 10 μm was formed on an aluminum foil (Al foil) having a thickness of about 15 μm using a copolymer whose oxidation potential is to be measured. The polymer layer was formed by coating a coating liquid prepared

by dispersing the copolymer in a solvent (chloroform) at a concentration of 2.0 wt% or so on the aluminum foil in a bar coating manner, maintaining it at 140°C for about 4 minutes, and then maintaining it at 130°C for about 60 minutes.

Thereafter, a separator and a lithium film were laminated on the polymer layer to manufacture a laminate in which the aluminum foil/polymer layer/separator/lithium film were laminated, and the laminate was punched into a circle with a diameter of about 1.4 cm or so. A coin cell was manufactured using the circularly punched laminate and an electrolyte (using the Welcos CR2032 coin cell kit).

As the separator, the WL20C model from W Scope Korea was used; as the lithium film, a film with a thickness of about 100 μm or so was used; and as the electrolyte, 1M $LiPF_6$ solution (solvent: EC/DMC/EMC =3/4/3 (mass ratio), EC: Ethylene Carbonate, DMC: dimethyl carbonate, EMC: ethylmethyl carbonate)), which was Enchem's product, was used.

The oxidation potential of the coin cell was measured using an electrochemical meter (potentiostat) (Princeton Applied Research, PARASTAT-MC) at 25°C. The oxidation potential was measured by measuring CV (Cyclic Voltammetry) in the range of 1.5V to 5.5V at a scan rate of 0.17 mV/sec to 0.5 mV/sec.

The oxidation potential is measured based on lithium and lithium ions ($Li/Li^+$).

**5. Oxidation potential measurement method of electrode active material**

An oxidation potential of an electrode active material was measured in the following manner.

An electrode active material layer was formed on an aluminum foil (Al foil) having a thickness of about 15 μm. The active material layer was formed using a slurry. The slurry was prepared by formulating an electrode active material, a conductive material (ECP (Ketjen Black) 0.5%, SFG (Trimrex graphite) 0.4%, DB (Denka Black) 0.4%), PVDF (poly(vinylidene fluoride)), and NMP (N-Methyl-2-pyrrolidone) in a weight ratio of 100:16:6:100 (electrode active material: conductive material: PVDF: NMP). The slurry was applied onto the aluminum foil with a doctor blade, dried at room temperature (about 25°C), and then maintained in a drying oven at 130°C for 30 minutes or so, and rolled to form an active material layer with a thickness of about 50 to 70 μm or so.

As the electrode active material, an electrode active material whose oxidation potential is to be measured, is used. A separator and a lithium film were laminated on the active material to manufacture a laminate in which the aluminum foil/active material layer/separator/lithium film were laminated, and the laminate was punched into a circle with a diameter of about 1.4 cm or so. A coin cell was manufactured using the circularly punched laminate and an electrolyte (using the Welcos CR2032 coin cell kit).

As the separator, the WL20C model from W Scope Korea was used; as the lithium film, a film with a thickness of about 100 μm or so was used; and as the electrolyte, 1M $LiPF_6$ solution (solvent: EC/DMC/EMC =3/4/3 (mass ratio), EC: Ethylene Carbonate, DMC: dimethyl carbonate, EMC: ethylmethyl carbonate)), which was Enchem's product, was used.

The oxidation potential of the coin cell was measured using an electrochemical meter (potentiostat) (Manufacturer: Princeton Applied Research, Product name: PARASTAT-MC) at 25°C. The oxidation potential was measured by measuring CV (Cyclic Voltammetry) in the range of 1.5V to 5.5V at a scan rate of 0.17 mV/sec to 0.5 mV/sec.

**6. DC resistance measurement method**

DC resistance was evaluated using the same coin cell as used in the "4. Oxidation potential measurement method of copolymer." A voltage of 4.3eV was applied to the coin cell for 10 minutes at room temperature (25°C), and the DC resistance was measured using a Fluke digital multi-tester (FLUKE-87-5).

**7. Interfacial resistance (AC impedance resistance)**

Interface resistance was evaluated through EIS (Electrochemical Impedance Spectronization) using the same coin cell as used for the "4. Oxidation potential measurement method of copolymer." A voltage of 4.3V was applied to the coin cell for 10 minutes at room temperature (25°C), and the interface resistance obtained in the high frequency region was measured from Nyquist plot obtained by an EIS measurement method at 50,000 Hz to 0.1 Hz. An electrochemical meter (potentiostat) (Princeton Applied Research, PARASTAT-MC) was used as the EIS measurement device.

**8. Measurement of maximum resistance change rate (DC resistance)**

A maximum resistance change rate $\Delta R1$ is determined according to Equation 1 below.

[Equation 1]

$$\Delta R1 = Max\{(R_{n+5}/R_n)/5\}$$

The ΔR1 is measured in the following manner.

A coin cell for DC resistance measurement (coin cell applied in the "6. DC resistance measurement method") is placed in the center of a convection oven (Jeotech, OF3-05W), and the temperature of the oven is set to increase by 5°C per minute from an initial temperature of 25°C to a final temperature of 135°C. The coin cell is connected to a resistance measurement multimeter (Fluke's digital multi-tester (FLUKE-87-5)) outside the oven to enable the resistance measurement. Subsequently, the DC resistance is measured at each temperature in a state where the temperature increases as set. That is, the DC resistance is measured at 25°C, 30°C, 35°C, 40°C, 45°C, 50°C, 55°C, 60°C, 65°C, 70°C, 75°C, 80°C, 85°C, 90°C, 95°C, 100°C, 105°C, 110°C, 115°C, 120°C, 125°C, and 130°C, respectively. Each temperature is maintained for 1 minute according to the set contents, and the DC resistance is measured after 1 minute has elapsed at the relevant temperature. The DC resistance at each temperature becomes $R_n$ of Equation 1 above, and the DC resistance at a temperature that is 5°C higher than the relevant temperature becomes $R_{n+5}$ of Equation 1 above. Among the measured DC resistances, the DC resistances at 25°C, 30°C, 35°C, 40°C, 45°C, 50°C, 55°C, 60°C, 65°C, 70°C, 75°C, 80°C, 85°C, 90°C, 95°C, 100°C, 105°C, 110°C, 115°C, 120°C, and 125°C are each designated as $R_n$, and 21 values of $(R_{n+5}/R_n)/5$ are obtained in the temperature range of 25°C to 130°C, and then the maximum value among them is designated as Max $\{(R_{n+5}/R_n)/5\}$(=ΔR1) of Equation 1 above, and the temperature n°C at $(R_{n+5}/R_n)/5$ of the maximum value is designated as the On-Set temperature.

**9. Measurement of maximum resistance change rate (AC impedance)**

A maximum resistance change rate ΔR2 is determined according to Equation 2 below.

[Equation 2]

$$\Delta R2 = Max\{(R_{z+5}/R_z)/5\}$$

The ΔR2 is measured in the following manner.

A coin cell for AC impedance resistance measurement (coin cell applied in the "7. Interface resistance (AC impedance resistance)") is placed in the center of a convection oven (Jeotech, OF3-05W), and the temperature of the oven is set to increase by 5°C per minute from an initial temperature of 25°C to a final temperature of 135°C. The coin cell is connected to a resistance measuring device (the measuring device applied in the "6. Interface resistance (AC impedance resistance)") outside the oven to enable the resistance measurement. Subsequently, the AC impedance resistance is measured at each temperature while increasing the temperature as set. That is, AC impedance resistance is measured at 25°C, 30°C, 35°C, 40°C, 45°C, 50°C, 55°C, 60°C, 65°C, 70°C, 75°C, 80°C, 85°C, 90°C, 95°C, 100°C, 105°C, 110°C, 115°C, 120°C, 125°C, and 130°C, respectively. According to the set contents, each temperature is maintained for 1 minute, and the AC impedance resistance is measured at the point when 1 minute has elapsed at the relevant temperature.

The AC impedance resistance at each temperature becomes $R_z$ of Equation 2 above, and the AC impedance resistance at a temperature that is 5°C higher than the relevant temperature becomes $R_{z+5}$ of Equation 2 above. Among the measured AC impedance resistances, the AC impedance resistances at 25°C, 30°C, 35°C, 40°C, 45°C, 50°C, 55°C, 60°C, 65°C, 70°C, 75°C, 80°C, 85°C, 90°C, 95°C, 100°C, 105°C, 110°C, 115°C, 120°C, and 125°C are each designated as $R_z$, and 21 values of $(R_{z+5}/R_z)/5$ are obtained in the temperature range of 25°C to 130°C, and the maximum value among them is designated as Max$\{(R_{z+5}/R_z)/5\}$(=ΔR2) of Equation 2 above, and the temperature z°C at $(R_{z+5}/R_z)/5$ of the maximum value is designated as the On-Set temperature.

The AC impedance resistance was determined as the resistance obtained from the semicircle of the high frequency region in Nyquist plot obtained by applying a voltage of 4.3V for 10 minutes, and using EIS measurement at 50,000 Hz to 0.1 Hz.

**Preparation Example 1. Synthesis of monomer (A)**

A monomer (A) of Formula A below was synthesized by the following manner.

[Formula A]

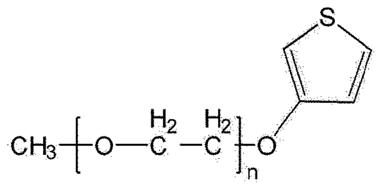

In 100 ml of toluene, 1.372 g (12.02 mmol, 1eq) of 3-methoxythiophene and 3 g (16.83 mmol, 1.4eq) of triethylene glycol monomethyl ether were dissolved together with 230 mg of p-toluenesulfonic acid (p-TsOH), and mixed. While the mixture was refluxed at 120°C to react (transetherification), the generated methanol was removed by 4A type molecular sieves filled in an extractor (soxhlet extractor). The reactant was refluxed for 24 hours, and then quenched with water, and extracted with ethyl acetate, and then washed with brine, and dried over magnesium sulfate ($MgSO_4$). The solvent was removed using a rotary evaporator, and the residue was purified by column chromatography eluting with methylene chloride/hexane (2:1) to obtain the target compound (monomer (A)). Figure 2 shows NMR analysis results for the monomer.

**Preparation Example 2. Synthesis of conductive copolymer (A)**

To a solution in which 3.20 g (19.71 mmol, 3eq) of iron (III) chloride was dissolved in 150ml of methylene chloride, 0.7 g (2.96 mmol, 0.6 eq) of 3-dodecylthiophene, 0.3 g (1.48 mmol, 0.3 eq) of 3-hexylthiophene, 0.12 g (0.49 mmol, 0.1 eq) of the monomer (A) of Preparation Example 1, and 0.37 g (1.64 mmol, 0.3 eq) of pyrrole were introduced and polymerized at 25°C for 24 hours to synthesize a conductive copolymer (A). In the conductive copolymer (A), the molar ratio of the 3-dodecylthiophene unit (I), the 3-hexylthiophene unit (II), the monomer (A) unit (III) of Preparation Example 1, and the pyrrole unit (IV) is 2.96:1.48:0.49:1.23 (I: II: III: IV).

The polymerization solution was placed in an osmosis membrane with an MWCO (molecular weight of cut-off) of 5000, and then immersed in 200ml of an acetonitrile solvent to remove unreacted iron chloride and monomer. The residue precipitated inside the osmosis membrane was washed with methanol, and dried at 60°C for 12 hours to obtain the conductive copolymer (A). The weight average molecular weight (Mw) and number average molecular weight (Mn) of the conductive copolymer (A) were 99,000 g/mol and 28,000 g/mol or so, respectively, and the oxidation potential was about 3.95 V or so.

**Preparation Example 3. Synthesis of conductive copolymer (B)**

To a solution in which 3.20 g (19.71 mmol, 3eq) of iron (III) chloride was dissolved in 150ml of methylene chloride, 0.41 g (1.97 mmol, 0.6 eq) of 3-dodecylthiophene, 0.24 g (0.98 mmol, 0.3 eq) of 3-hexylthiophene, 0.1 g (0.33 mmol, 0.1 eq) of the monomer (A) of Preparation Example 1, and 0.74 g (3.28 mmol, 0.3 eq) of pyrrole were introduced and polymerized at 25°C for 24 hours to synthesize a conductive copolymer (B). In the conductive copolymer (B), the molar ratio of the 3-dodecylthiophene unit (I), the 3-hexylthiophene unit (II), the monomer (A) unit (III) of Preparation Example 1, and the pyrrole unit (IV) is 1.97:0.98:0.33:3.28 (I: II: III: IV).

The polymerization solution was placed in an osmosis membrane with an MWCO (molecular weight of cut-off) of 5000, and then immersed in 200ml of an acetonitrile solvent to remove unreacted iron chloride and monomer. The residue precipitated inside the osmosis membrane was washed with methanol, and dried at 60°C for 12 hours to obtain the conductive copolymer (B). The weight average molecular weight (Mw) and number average molecular weight (Mn) of the conductive copolymer (B) were 102,000 g/mol and 25,000 g/mol or so, respectively, and the oxidation potential was about 3.90 V or so.

**Preparation Example 4. Synthesis of conductive copolymer (C)**

To a solution in which 3.20 g (19.71 mmol, 3eq) of iron (III) chloride was dissolved in 150 ml of methylene chloride, 1 g (3.94 mmol, 0.6 eq) of 3-dodecylthiophene, 0.33 g (1.97 mmol, 0.3 eq) of 3-hexylthiophene, and 0.16 g (0.66 mmol, 0.1 eq) of the monomer (A) of Preparation Example 1 were introduced, and polymerized at 30°C for 24 hours to prepare a conductive copolymer (C). In the conductive copolymer (C), the molar ratio of the 3-dodecylthiophene unit (I), the 3-hexylthiophene unit (II), and the monomer (A) unit (III) of Preparation Example 1 is 3.94:1.97:0.66 (I: II: III) or so.

The polymerization solution was placed in an osmosis membrane with an MWCO (molecular weight of cut-off) of 5000, and then immersed in 200 ml of an acetonitrile solvent to remove unreacted iron (III) chloride monomer and low molecular weight oligomers. The residue precipitated inside the osmosis membrane was washed with methanol, and dried

at 60°C for 12 hours to obtain the conductive copolymer (C).

The conductive copolymer (C) had a weight average molecular weight (Mw) and a number average molecular weight (Mn) of 118,000 g/mol and 24,500 g/mol, respectively, and the oxidation potential was about 4.04 V or so.

**Example 1.**

An Al foil with a thickness of about 15 μm or so was used as a current collector layer. The copolymer (A) of Preparation Example 2 was dispersed in a solvent (chloroform) at a concentration of 2.0 wt% or so to prepare a coating liquid. The coating liquid was coated on the current collector layer in a bar coating manner. Subsequently, the current collector layer on which the coating layer was formed was maintained in a drying oven at 140°C for 4 minutes or so, and again maintained at 130°C or so for 1 hour to form a layer (polymer layer) with a thickness of about 200 nm.

Subsequently, an active material layer was formed on the polymer layer. The active material layer was formed using a slurry. The slurry was prepared by formulating an electrode active material, a conductive material (ECP (Ketjen Black) 0.5%, SFG (Trimrex graphite) 0.4%, DB (Denka Black) 0.4%), PVDF (poly(vinylidene fluoride)), and NMP (N-Methyl-2-pyrrolidone) in a solid content ratio of 100:16:6:100 (electrode active material: conductive material: PVDF: NMP). The slurry was applied onto the polymer layer with a doctor blade, dried at room temperature, and then maintained in a drying oven at 130°C for 30 minutes or so, and then rolled to form it to a thickness of about 60 μm or so.

As the electrode active material, an NCM-based positive electrode active material ($Li[Ni_{0.8}Co_{0.1}Mn_{0.1}]O_2$) was used, and the oxidation potential of the active material was about 4.08 V.

**Example 2.**

An electrode was manufactured in the same manner as in Example 1, except that the copolymer (B) of Preparation Example 3 was used instead of the copolymer (A) of Preparation Example 2.

**Comparative Example 1.**

An electrode was manufactured in the same manner as in Example 1, except that the copolymer (C) of Preparation Example 4 was used instead of the copolymer (A) of Preparation Example 2.

**Test Example 1. Charge-and-discharge test**

A charge-and-discharge test was performed by manufacturing a coin cell. The coin cell was manufactured using a coin cell kit (Welcos CR2032 coin cell kit) of the CR2032 standard. Upon manufacturing the coin cell, the electrode manufactured in the example or comparative example was used as a positive electrode, and a lithium film (thickness: about 100 μm) was used as a negative electrode. As an electrolyte, a 1M $LiPF_6$ solution (solvent: EC/DMC/EMC=3/4/3 (mass ratio), EC: ethylene carbonate, DMC: dimethyl carbonate, EMC: ethylmethyl carbonate), which was Enchem's product, was used, and as a separator, a PE (poly(ethylene)) separator (W-Scope Korea, WL20C model) was used.

The charge-and-discharge test was performed using the coin cell, and the charge-and-discharge test was performed at room temperature (about 25°C). The initial capacity of the coin cell was measured by setting a final charging voltage of 4.5V and a final charging current of 1mA, and charging and discharging at a rate of 0.1 C using the CC (Constant Current)/CV (Constant Voltage) method. The results are summarized in the 0.1C/0.1C initial capacity section of Table 1 below. In the relevant section, Ch means charge, and Dch means discharge.

Subsequently, the capacity change of the coin cell was measured by setting a final charging voltage of 4.5V and a final charging current of 1mA, charging at a rate of 0.5C using the CC (Constant Current)/CV (Constant Voltage) method, and discharging under conditions of 0.1C, 0.5C, 1C, and 2C.

The results are summarized in the 0.5C Ch (0.5C charge) section of Table 1 below. In the section, 0.1C Dch, 0.5C Dch, 1C Dch, and 2C Dch are the capacities measured while discharging the coin cell charged at 0.5C under conditions of 0.1C, 0.5C, 1C, and 2C.

[Table 1]

| | 0.1C/0.1C Initial Capacity | | | 0.5C Ch (0.5C charging) | | | |
|---|---|---|---|---|---|---|---|
| | Ch | Dch | Efficiency | 0.1C Dch | 0.5C Dch | 1C Dch | 2C Dch |
| Example 1 | 193.0 | 183.1 | 95% | 181.9 | 171.7 | 167.6 | 163.6 |
| Example 2 | 192.9 | 184.8 | 96% | 182.2 | 173.4 | 170.2 | 168.1 |
| Comparative Example 1 | 193.1 | 181.4 | 94% | 180.7 | 170.3 | 165.1 | 158.8 |

(continued)

| | 0.1C/0.1C Initial Capacity | | | 0.5C Ch (0.5C charging) | | | |
|---|---|---|---|---|---|---|---|
| | Ch | Dch | Efficiency | 0.1C Dch | 0.5C Dch | 1C Dch | 2C Dch |
| Ref. | 192.9 | 182.4 | 95% | 181.6 | 171.9 | 167.5 | 162.3 |

In Table 1, Ref is an electrode manufactured in the same manner as Example 1, which is an electrode manufactured by forming the active material layer directly on the current collector without forming the polymer layer in Example 1. Looking at the results in Table 1, Examples 1 and 2 and Comparative Example 1 all showed initial capacities like that of Ref. However, in the case of Comparative Example 1, it can be known that the faster the discharging rate in the charge-and-discharge test, the greater the decrease in capacity.

On the other hand, Examples 1 and 2 did not show a decrease in capacity even when the discharging rate was fast, and rather, it can be known that a higher capacity is confirmed compared to Ref.

Therefore, it can be confirmed that the electrodes of Examples 1 and 2 are capable of stable operation in the normal state.

**Test Example 2. PTC effect test**

The results of evaluating DC resistance, interface resistance, and the like for Example 1 are as shown in Table 2 below.

[Table 2]

| | | Example 1 | Example 2 | Comparative Example 1 |
|---|---|---|---|---|
| DC resistance (Ω·cm) | | 420 | 400 | 510 |
| Interface resistance (AC impedance) | | 50 | 48 | 72 |
| Equation 1 | ΔR1 | 210 | 200 | 190 |
| | On set (°C) | 95 | 95 | 95 |
| Equation 2 | ΔR2 | 23.3 | 25 | 15.2 |
| | On set (°C) | 95 | 95 | 95 |

From Table 2, it can be confirmed that all Examples and Comparative Example show appropriate PTC effects. However, in the case of Comparative Example 1, as in the results of Test Example 1 above, it can be known that an undesirable increase in resistance of the SFL occurs during discharging, whereby it is difficult to operate stably in the normal state.

[Explanation of Reference Numerals]

100: current collector body
200: polymer layer
300: active material layer

**Claims**

**1.** A copolymer comprising a thiophene unit and a unit of Formula 3 below:

[Formula 3]

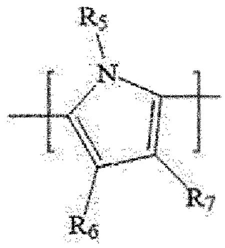

wherein, $R_5$, $R_6$ and $R_7$ are each independently hydrogen, a polar functional group, or a hydrocarbon functional group.

2. The copolymer according to claim 1, wherein the polar functional group is a carboxyl group, a hydroxy group, an amino group, a cyano group, a nitro group, an ether group, or a functional group of Formula 4 below, and the hydrocarbon functional group is an alkyl group, an alkenyl group, an alkynyl group, an alkoxy group, an alkylcarbonyl group, or an alkylcarbonyloxy group:

[Formula 4]

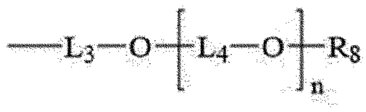

wherein, $L_3$ is a single bond, an alkylene group, or an alkylidene group, $L_4$ is an alkylene group or an alkylidene group, $R_8$ is hydrogen or an alkyl group, and n is a number in a range of 1 to 10.

3. The copolymer according to claim 1, having an oxidation potential of 4.00 V or less relative to lithium.

4. The copolymer according to claim 1, comprising, as the thiophene unit, a thiophene unit having a hydrocarbon functional group.

5. The copolymer according to claim 1, comprising, as the thiophene unit, a first thiophene unit having a hydrocarbon functional group with 10 or more carbon atoms and a second thiophene unit having a hydrocarbon functional group with 9 or less carbon atoms.

6. The copolymer according to claim 5, wherein the hydrocarbon functional group of the first or second thiophene unit is a linear or branched alkyl group, alkenyl group, or alkynyl group.

7. The copolymer according to claim 5, wherein a ratio of the total mole number of the first and second thiophene units is 30 mol% or more.

8. The copolymer according to claim 5, wherein a ratio M2/M1 of the mole number M2 of the second thiophene unit to the mole number M1 of the first thiophene unit is in a range of 0.01 to 100.

9. The copolymer according to claim 4, further comprising, as the thiophene unit, a thiophene unit having a polar functional group.

10. The copolymer according to claim 9, comprising the thiophene unit having a hydrocarbon functional group in an amount of 1 mole to 500 moles per mole of the thiophene unit having a polar functional group.

11. The copolymer according to claim 1, comprising the unit of Formula 3 in a ratio of 1 to 90 mol%.

12. The copolymer according to claim 1, having DC resistance of 10,000 Ω·cm or less.

13. The copolymer according to claim 1, having AC impedance resistance of 1,000 Ω or less.

**14.** The copolymer according to claim 1, wherein $\Delta R1$ of Equation 1 below is 100 $\Omega \cdot cm/°C$ or more, and a temperature $R_n$ at which the $\Delta R1$ of 100 $\Omega \cdot cm/°C$ or more is confirmed is 80°C or more:

[Equation 1]

$$\Delta R1 = Max\{(R_{n+5}/R_n)/5\}$$

wherein, $R_n$ is the DC resistance at any temperature n°C within a range of 25°C to 135°C, and $R_{n+5}$ is the DC resistance at a temperature ((n+5)°C) 5°C higher than the temperature n°C, and $Max\{(R_{n+5}/R_n)/5\}$ is the maximum value among the $(R_{n+5}/R_n)/5$ values confirmed within the temperature range of 25°C to 135°C.

**15.** The copolymer according to claim 1, wherein $\Delta R2$ of Equation 2 below is 10 $\Omega/°C$ or more, and a temperature at which the $\Delta R2$ of 10 $\Omega/°C$ or more is confirmed is 80°C or more:

[Equation 2]

$$\Delta R2 = Max\{(R_{z+5}/R_z)/5\}$$

wherein, $R_z$ is the AC impedance resistance at any temperature n°C within a range of 25°C to 135°C, and $R_{z+5}$ is the AC impedance resistance at a temperature ((n+5)°C) 5°C higher than the temperature n°C, and $Max\{(R_{z+5}/R_z)/5\}$ is the maximum value among the $(R_{z+5}/R_z)/5$ values confirmed within the temperature range of 25°C to 135°C.

**16.** A current collector for an electrode having:

a current collector body; and
a polymer layer formed on the current collector body and comprising the copolymer of any one of claims 1 to 15.

**17.** An electrode having

a current collector body;
an active material layer formed on the current collector body and comprising an electrode active material; and
a polymer layer formed between the current collector body and the active material layer and comprising the copolymer of any one of claims 1 to 15.

**18.** The electrode according to claim 17, wherein RV of Equation 3 below is more than 100:

[Equation 3]

$$RV = 100XVa/Vp$$

wherein, Va is the oxidation potential of the electrode active material, and Vp is the oxidation potential of the copolymer or the polymer layer.

**19.** An electrode assembly comprising the electrode of claim 17.

**20.** A secondary battery comprising the electrode of claim 17.

[Figure 1]

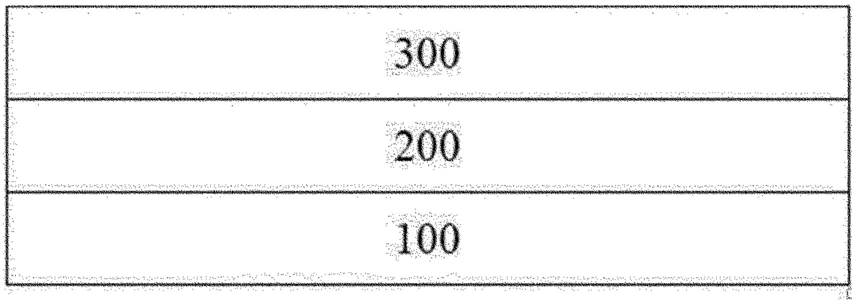


[Figure 2]

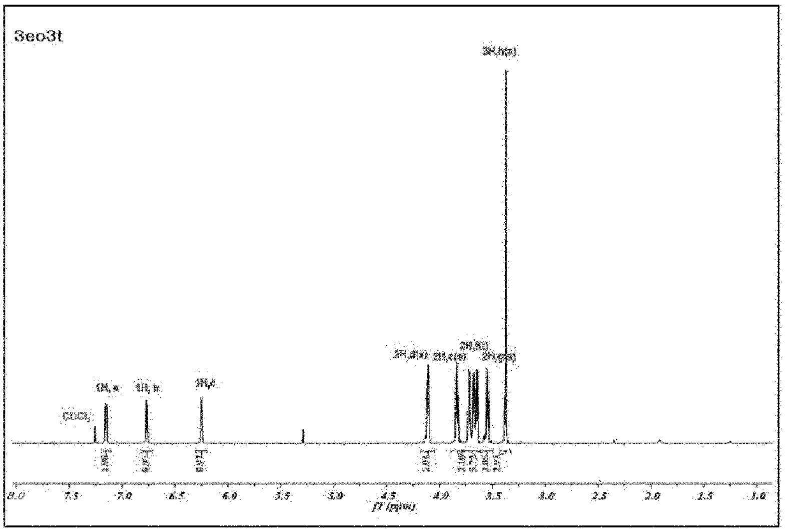

## INTERNATIONAL SEARCH REPORT

International application No.
**PCT/KR2023/016284**

### A. CLASSIFICATION OF SUBJECT MATTER

**C08G 61/12**(2006.01)i; **H01M 4/66**(2006.01)i; **H01M 4/131**(2010.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

C08G 61/12(2006.01); H01M 10/0525(2010.01); H01M 4/04(2006.01); H01M 4/131(2010.01); H01M 4/136(2010.01); H01M 4/1399(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 공중합체(copolymer), 피롤(pyrrole), 티오펜(thiophene), 관능기(functional group), 전극(electrode)

### C. DOCUMENTS CONSIDERED TO BE RELEVANT

| Category* | Citation of document, with indication, where appropriate, of the relevant passages | Relevant to claim No. |
|---|---|---|
| | JAROSZ, T. et al. Electrochemically Produced Copolymers of Pyrrole and Its Derivatives: A Plentitude of Material Properties Using “Simple” Heterocyclic Co-Monomers. Materials. 2021, vol. 14, document no. 281, pp. 1-20. | |
| X | See page 14; formula 2; and figure 4. | 1-4,11-15 |
| Y | | 16-20 |
| A | | 5-10 |
| Y | KR 10-2006-0084886 A (LG CHEM, LTD.) 26 July 2006 (2006-07-26) See abstract; paragraphs [0018]-[0020]; and examples 1-2. | 16-20 |
| A | CN 111785925 A (TIANJIN EV ENERGIES CO., LTD.) 16 October 2020 (2020-10-16) See entire document. | 1-20 |
| A | CN 109920972 A (XIANGTAN UNIVERSITY) 21 June 2019 (2019-06-21) See entire document. | 1-20 |

☑ Further documents are listed in the continuation of Box C. ☑ See patent family annex.

* Special categories of cited documents:
- “A” document defining the general state of the art which is not considered to be of particular relevance
- “D” document cited by the applicant in the international application
- “E” earlier application or patent but published on or after the international filing date
- “L” document which may throw doubts on priority claim(s) or which is cited to establish the publication date of another citation or other special reason (as specified)
- “O” document referring to an oral disclosure, use, exhibition or other means
- “P” document published prior to the international filing date but later than the priority date claimed
- “T” later document published after the international filing date or priority date and not in conflict with the application but cited to understand the principle or theory underlying the invention
- “X” document of particular relevance; the claimed invention cannot be considered novel or cannot be considered to involve an inventive step when the document is taken alone
- “Y” document of particular relevance; the claimed invention cannot be considered to involve an inventive step when the document is combined with one or more other such documents, such combination being obvious to a person skilled in the art
- “&” document member of the same patent family

| Date of the actual completion of the international search | Date of mailing of the international search report |
|---|---|
| **01 February 2024** | **02 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2023/016284**

**C. DOCUMENTS CONSIDERED TO BE RELEVANT**

| Category* | Citation of document, with indication, where appropriate, of the relevant passages | Relevant to claim No. |
|---|---|---|
| A | LI, H. et al. A temperature-sensitive poly(3-octylpyrrole)/carbon composite as a conductive matrix of cathodes for building safer Li-ion batteries. Energy Storage Materials. 2019, vol. 17, pp. 275–283. See entire document. | 1-20 |

Form PCT/ISA/210 (second sheet) (July 2022)

**INTERNATIONAL SEARCH REPORT**
**Information on patent family members**

International application No.
**PCT/KR2023/016284**

| Patent document cited in search report | | | Publication date (day/month/year) | Patent family member(s) | | | Publication date (day/month/year) |
|---|---|---|---|---|---|---|---|
| KR | 10-2006-0084886 | A | 26 July 2006 | None | | | |
| CN | 111785925 | A | 16 October 2020 | CN | 111785925 | B | 02 June 2023 |
| CN | 109920972 | A | 21 June 2019 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020220134842